# EUROPÄISCHE PATENTSCHRIFT

(11) **EP 4 465 818 B1**
(45) Veröffentlichungstag und Bekanntmachung des Hinweises auf die Patenterteilung: **14.01.2026**
(21) Anmeldenummer: 23703670.2
(22) Anmeldetag: 17.01.2023
(51) Int. Cl.: A01N 63/20, A01N 25/00, A01N 25/24

(54) **ZUBEREITUNGSSET ZUR BESCHICHTUNG VON SAATGUT**
PREPARATION KIT FOR COATING SEEDS
KIT DE PREPARATION POUR L'ENROBAGE DES GRAINES

(30) Priorität: 21.01.2022 DE 102022000218
(43) Veröffentlichungstag der Anmeldung: 27.11.2024
(73) Patentinhaber: Instant Seed GmbH, 15831 Mahlow (DE)
(72) Erfinder: KRECISZ, Thomas, 13407 Berlin (DE); KRECISZ, Margarethe, 13351 Berlin (DE)
(74) Vertreter: Gulde & Partner
(86) Internationale Anmeldenummer: PCT/DE2023/000004
(87) Internationale Veröffentlichungsnummer: WO 2023/138722

(56) Entgegenhaltungen:
- WO-A2-2012/143677
- WO-A2-2012/143682
- WO-A2-2012/143685
- US-A1- 2020 093 125
- US-A1- 2021 259 255

## Beschreibung

### Gebiet der Erfindung

Die Erfindung betrifft ein Verfahren zur Beschichtung eines Saatgutes mit den Komponenten: A) ein biologisch abbaubares Wachs oder eine Mischung verschiedener solcher Wachse, B) optional einen Trägerstoff oder mehrere verschiedene Trägerstoffe, C) optional einen von B) verschiedenen Zusatzstoff oder mehrere verschiedene solcher Zusatzstoffe, D) einen von B) und C) verschiedenen biologisch wirksamen Zusatzstoff oder mehrere solcher Zusatzstoffe, und E) optional Wasser sowie beschichtetes Saatgut hergestellt gemäss dem Verfahren.

### Stand der Technik

Die Anwendung von Beschichtungen auf Saatgut wird eingesetzt um die Fließfähigkeit und Pflanzbarkeit des Saatguts zu verbessern, einfache Handhabung des Saatguts in Saatgutaufbereitungsanlagen, Saatgutbehältern und Sämaschinen zu ermöglichen und auch um die Erträge aus einer vorgegebenen Menge an Saatgut zu erhöhen.

### Stand der Technik

WO 2012/143685 A2 beschreibt Beschichtungszusammensetzungen zum Aufbringen auf monokotyle Pflanzenstrukturen, aus denen Wurzeln und Sprossen wachsen können, wobei die Beschichtungszusammensetzung ein oder mehrere organische Materialien mit einem Schmelzpunkt von ≥ 50°Celsius und ein oder mehrere Additive umfasst, Verfahren zur Herstellung solcher Zusammensetzungen und beschichtete monokotyle Pflanzenstrukturen wie Samen von monokotilen Pflanzen.

WO 2012/143677 A2 offenbart Beschichtungszusammensetzungen für Ölsaatpflanzensamen, aus dem Wurzeln und Sprossen wachsen können, wobei die Beschichtungszusammensetzung ein organisches Trägermaterial und einen oder mehrere biologische Wirkstoffe umfasst, die eine Aktivität gegen mindestens einen oder mehrere Krankheitserreger der Ölsaatpflanze besitzen.

WO 2012/143682 A2 beschreibt Beschichtungszusammensetzungen zum Aufbringen auf Sojabohnensamen, aus denen Wurzeln und Sprossen wachsen können, wobei die Beschichtungszusammensetzung ein oder mehrere organische Materialien mit einem Schmelzpunkt von ≥ 50°CGrad und ein oder mehrere Additive umfasst, Verfahren zur Herstellung solcher Zusammensetzungen und beschichtete Sojabohnensamen.

US 2021/259255 Al offenbart einen eingekapselten Mikroorganismus, der Teilchen mit einem Kern und einer Beschichtung über dem Kern umfasst. Der Kern umfasst einen Mikroorganismus und ein Alginat oder Polyaspartat. Die Beschichtung umfasst eine Beschichtung auf Lipidbasis. Die Lipidwachse, die auf die eingekapselten mikrobiellen Kapseln aufgetragen werden, sind durch Enzyme abbaubar, die von keimenden Samen produziert werden. US 2020/093125 Al beschreibt Impfstoffzusammensetzungen und Verfahren zur Verbesserung des Überlebens und/oder der Stabilität von mikrobiellen Zellen und/oder Sporen in einer Impfstoffzusammensetzung. Die Impfstoffzusammensetzungen umfassen mikrobielle Zellen und/oder Sporen in einem Träger, der ein oder mehrere Paraffinöle und/oder Wachse umfasst.

Weitere Verfahren zur Beschichtung von Saatgut sind beispielsweise aus den Literaturstellen US 2016/0345575, US 2,019,758 und DE 19524724 A1 bekannt. Wachsbeschichtungen für Saatgut einerseits und für Lebensmittel andererseits sind auch aus den Literaturstellen WO 2005/077169 A1, DE 60208679 T2 und WO 2008/076902 A1 bekannt.

Aus anderen Zusammenhängen ist bekannt, dass Rhizobien und andere Mikroorganismen die Keimfähigkeit und das Wachstum von Pflanzen fördern können.

Problematisch bei den insofern bekannten Beschichtungsverfahren ist, dass Suspensionen bzw. Dispersionen von Wachspartikeln in Wasser eingesetzt werden, und zwar ohne erhöhte Temperaturen beim Aufbringen solcher Suspensionen bzw. Dispersionen. Diese Suspensionen bzw. Dispersionen können zudem nur schlecht Feststoffe aufnehmen.

### Technisches Problem der Erfindung

Der Erfindung liegt daher das technische Problem zu Grunde, ein ein Beschichtungsverfahren anzugeben, mit welchem Saatgut mit einer wachshaltigen Beschichtung versehen werden kann, welche lebensfähige Mikroorganismen in einer Menge enthält, welche die Keim- und/oder Wachstumsfähigkeit des Saatgutes erhöht, unter Beibehaltung aller Vorteile einer konventionellen Saatgutbeschichtung.

Grundzüge der Erfindung und bevorzugte Ausführungsformen.

Zur Lösung dieses technischen Problems lehrt die Erfindung ein Verfahren zur Beschichtung von Saatgut, wobei die Beschichtung frei von Mikroplastik ist, umfassend die folgenden Verfahrensschritte:
V1) Umwälzen des Saatgutes in einer Beschichtungsanlage, in welcher das Saatgut auf eine Temperatur von zumindest 30°C, insbesondere zumindest 40°C, erwärmt wird;
V2) Zugabe einer Komponente A) bestehend aus einem biologisch abbaubaren Wachs oder einer Mischung verschiedener solcher Wachse, wobei die Komponente A) eine Temperatur von höchstens 60°C, insbesondere höchstens 50°C, insbesondere höchstens 40°C, aufweist, wobei eine permanente Umwälzung des Saatguts und der Komponente A) stattfindet, und die Komponente A) zu ihrer Schmelztemperatur erwärmt wird, schmilzt und an dem Saatgut anhaftet;
V3) Zugabe einer Komponente D), sowie optionale Zugabe einer oder mehrerer Komponenten B), C) und E), wobei
   B) einen Trägerstoff oder mehrere verschiedene Trägerstoffe umfasst,
   C) einen von B) verschiedenen Zusatzstoff oder mehrere verschiedene solcher Zusatzstoffe umfasst,
   D) einen von B) und C) verschiedenen biologisch wirksamen Zusatzstoff oder mehrere solcher Zusatzstoffe umfasst, wobei die Komponente D) zumindest einen die Keimung und das Wachstum der aus dem Saatgut entstehenden Pflanzen fördernden und saatgutfremden Mikroorganismus umfasst, und
   E) Wasser ist;
V4) Umwälzung des Saatgutes und der eingefüllten Komponenten A), D), sowie gegebenenfalls B), C) und/oder E), derart, dass die in V3) zugegebenen Komponenten an der am Saatgut anhaftenden Komponente A) ankleben und zumindest zum Teil von der Komponente A) zugedeckt werden und dass das beschichtete Saatgut gebildet wird;
V5) Abkühlung des beschichteten Saatgutes auf Raumtemperatur.

Erfindungsgemäß können die Komponenten D) und E) miteinander gemischt vorliegen. Ebenso können die Komponenten B), D) und E) miteinander gemischt vorliegen. Auch ist es möglich, dass die Komponenten A), B), D) und E) miteinander gemischt vorliegen. Schließlich können alle Komponenten A) bis E) miteinander gemischt vorliegen.

Mit dem erfindungsgemäßen Verfahren lassen sich allen Anforderungen genügende Beschichtungen auf Saatgut aufbringen, wobei die damit aufgebrachten Mikroorganismen lebensfähig sind und so das Keimen und das Wachstum der aus dem Saatgut entstehenden Pflanzen erheblich befördert wird, wodurch auch der landwirtschaftliche oder forstwirtschaftliche Ertrag gegenüber dem Stand der Technik verbessert wird. Die Abwesenheit von Mikroplastik (Polymerpartikel mit einer maximalen Erstreckung in einer Raumrichtung von unter 5 mm), vorzugsweise sogar die Abwesenheit jeglicher synthetischer Polymere, stellt zudem einen ganz erheblichen Beitrag zum Umweltschutz dar.

Im Einzelnen kann die Erfindung wie folgend beschrieben weitergebildet sein.

Das Saatgut ist im Prinzip beliebig und typischerweise ein Saatgut einer oder mehrerer Kulturpflanzen, welche ausgewählt ist bzw. sind aus der Gruppe bestehend aus Weizen, Roggen, Gerste, Triticale, Hafer oder Reis; Rüben, z. B. Zuckerrüben oder Futterrüben; Obst, wie Kern-, Stein- oder Beerenobst, z. B. Äpfel, Birnen, Pflaumen, Pfirsiche, Mandeln, Kirschen, Erdbeeren, Himbeeren, Brombeeren oder Stachelbeeren; Hülsenfrüchte, wie z. B. Linsen, Erbsen, Luzerne oder Sojabohnen; Ölpflanzen, wie z. B. Raps, Senf, Oliven, Sonnenblumen, Kokosnuss, Kakaobohnen, Rizinus, Ölpalmen, oder Erdnüsse; Kürbisgewächse, wie Kürbisse, Gurken oder Melonen; Faserpflanzen, wie Baumwolle, Flachs, Hanf oder Jute; Zitrusfrüchte, wie Orangen, Zitronen, Grapefruits oder Mandarinen; Gemüse, wie Spinat, Salat, Spargel, Kohl, Möhren, Zwiebeln, Tomaten, Kartoffeln, Kürbisgewächse oder Paprika; Gewürzpflanzen, wie Avocados, Zimt oder Kampfer; Energie- und Rohstoffpflanzen, wie Mais, Sojabohnen, Raps, Zuckerrohr oder Ölpalmen; Tabak; Nüsse; Kaffee; Tee; Bananen; Reben (Tafeltrauben und Traubensaftreben); Hopfen; Naturkautschukpflanzen oder Zier- und Forstpflanzen, wie Blumen, Sträucher, Laubbäume oder immergrüne Pflanzen, z. B. Koniferen, Akazien, Eichen, Buchen, Eiben, Tannen, Kiefern, Birken, Ahorne, Erlen, Hainbuchen, Weißdorne, Eschen, Stechpalmen, Pappeln, Steinobstbäume, Weiden Mehlbeeren, Linden und Ulmen.

Die Komponente A) kann ein beliebiges im Bereich der Beschichtung von Saatgut geeignetes Wachs sein. Es kann sich um ein Wachs oder die Mischung von Wachsen handeln, welches bzw. welche ausgewählt ist aus der Gruppe bestehend aus natürlichen pflanzlichen oder tierischen Wachsen, mineralischen Wachsen und synthetischen oder teilsynthetischen Wachsen, vorzugsweise als Ester zumindest einer unverzweigten Alkansäure mit 22 oder mehr Kohlenstoffatomen, Fettsäure, oder einer kürzerkettigen gesättigten Hydroxyfettsäure, insbesondere Docosansäure, Tricosansäure, Tetracosansäure, Pentacosansäure, Hexacosansäure, Heptacosansäure, Octacosansäure, Nonacosansäure, Triacontansäure, Hentriacontansäure, Dotriacontansäure, Tritriacontansäure, Tetratriacontansäure, Sabininsäure, Juniperinsäure, Thapsiasäure, Palmitinsäure, Stearinsäure, oder Mischungen von 2 oder mehr solcher Alkansäuren, und zumindest eines aliphatischen einwertigen Alkohols mit 6 oder mehr Kohlenstoffatomen, insbesondere 1-Hexanol, 1-Heptanol, 1-Octanol, 1-Decanol, 1-Dodecanol, 1-Tetradecanol, 1-Hexadecanol, 1-Heptadecanol, 1-Octadecanol, 1-Eicosanol, 1-Docosanol, 1-Tetracosanol, 1-Hexacosanol, 1-Octacosanol, 1-Triacontanol, cis-9-Hexadecen-1-ol, cis-9-Octadecen-1-ol, trans-9-Octadecen-1-ol, cis-11-Octadecen-1-ol, cis,cis-9,12-Octadecadien-1-ol, oder 6,9,12-Octadecatrien-1-ol (γ-Linolenylalkohol) oder Mischungen von 2 oder mehr solcher Alkohole.

Die Komponente A) kann als Feststoff vorliegen, wobei die Partikelgröße der Komponente A) vorzugsweise unterhalb von 300 µm, insbesondere unter 100 µm, liegt, gemessen mit einen Prüfsieb entsprechender Maschenweite. Die Komponente A) hat typischerweise aber nicht zwingend einen Schmelzpunkt von mindestens 30°C, vorzugsweise mindestens 40°C, und maximal 140°C, beispielsweise maximal 80°C, vorzugsweise maximal 60°C, insbesondere maximal 50°C. Die Komponente A) kann in der Komponente E) dispergiert sein.

Die Komponente B) ist vorzugsweise ein in Wasser quellbarer oder nicht quellbarer Zusatzstoff, beispielsweise ausgewählt aus mineralischen Erden, wie Silikaten, Kieselsäuren, Gelen, Hydrogelen, Talkum, Kaoline, Kalkstein, Kalk, Kreide, Löss, Tone, Dolomit, Diatomeenerde, Calciumsulfat, Magnesiumsulfat, Magnesiumoxid, und/oder ein Fertilisator, wie beispielsweise Ammoniumsulfat, Ammoniumphosphat, Ammoniumnitrat, Harnstoffe, und/oder Erzeugnissen pflanzlichen Ursprungs, wie beispielsweise Getreidemehl, Baumrindenmehl, Holzmehl und Nussschalenmehl, Zellulosepulver, Torf (bevorzugt) und Mischungen verschiedener solcher Zusatzstoffe, wobei die Partikelgröße dieser Zusatzstoffe vorzugsweise unter 300 µm, insbesondere unter 100 µm liegt, gemessen mit einem Prüfsieb entsprechender Maschenweite.

Mit dem Ausdruck "quellbar" ist bezeichnet, dass die betreffende Komponente B) wasserspeichernd ist. In diesem Fall ist es möglich, dass die Komponente D)als wässrige Lösung oder Suspension in die Komponente B) eingebracht und hierin gespeichert ist, und zwar ohne dass die Komponente D) austrocknet, was je nach Art der Komponente D) (beispielsweise eine flüssige bzw. wässrige Zubereitung mit Mikroorganismen) vorteilhaft ist.

Die Komponente C) kann ausgewählt sein aus nicht-wässrigen Lösungsmitteln, wie beispielsweise Mineralölfraktionen mit mittlerem bis hohem Siedepunkt, wie Kerosin oder Dieselöl, Steinkohlenteeröle und Öle pflanzlichen oder tierischen Ursprungs, aliphatische, zyklische und aromatische Kohlenwasserstoffe, z. B. Toluol, Xylol, Paraffin, Tetrahydronaphthalin, alkylierte Naphthaline oder deren Derivate, Alkohole wie Methanol, Ethanol, Propanol, Butanol und Cyclohexanol, Glykole, Ketone wie Cyclohexanon und Gamma-Butyrolacton, Fettsäuredimethylamide, Fettsäuren und Fettsäureester sowie stark polare Lösungsmittel, z. B. Amine wie N-Methylpyrrolidon.

Alternativ oder zusätzlich kann die Komponente C) ausgewählt sein aus einem oder mehreren Mitteln aus der Gruppe bestehend aus Tenside, Dispergiermittel, Emulgatoren, Löse- und Haftvermittler und Schutzkolloide, wie beispielsweise Alkali-, Erdalkali- und Metall- und Ammoniumsalze aromatischer Sulfonsäuren, wie Ligninsulfonsäure (Borresperse^{®}-Typen, Borregard, Norwegen), Phenolsulfonsäure, Naphthalinsulfonsäure (Morwet^{®}-Typen, Akzo Nobel, U.S.A.), Dibutylnaphthalinsulfonsäure (Nekal^{®}-Typen, BASF, Deutschland), und Fettsäuren, Alkylsulfonate, Alkylarylsulfonate, Alkylsulfate, Laurylethersulfate, Fettalkoholsulfate und sulfatierte Hexa-, Hepta- und Octadecanolate, sulfatierte Fettalkohol, Glykolethern, ferner Kondensate von Naphthalin oder von Naphthalinsulfonsäure mit Phenol und Formaldehyd, Polyoxy-ethylenoctylphenylether, ethoxyliertes Isooctylphenol, Octylphenol, Nonylphenol, Alkylphenylpolyglykolether, Tributylphenylpolyglykolether, Tristearylphenyl Polyglykolether, Alkylarylpolyetheralkohole, Alkohol und FettalkoholEthylenoxid-Kondensate, ethoxyliertes Rizinusöl, Polyoxyethylenalkylether, ethoxyliertes Polyoxypropylen, Laurylalkoholpolyglykoletheracetal, Sorbitolester, Lignin-SulfitAblaugen und Proteine, denaturierte Proteine, Polysaccharide (z. B. Methylcellulose), hydrophobisch modifizierte Stärken, Maleinsäureanhydriddiisobutylencopolymer, Polyvinylalkohole (Mowiol^{®}-Typen, Clariant, Schweiz), Polycarboxylate (Sokolan^{®}-Typen, BASF, Deutschland), Polyalkoxylate, Polyvinylamine (Lupasol^{®}-Typen, BASF, Deutschland), Polyvinylpyrrolidon und ihre Copolymere davon.

Die Komponente C) kann alternativ oder zusätzlich organische und anorganische Verdickungsmittel enthalten, wie beispielsweise Polysaccharide sowie organische und anorganische Tone wie Xanthangummi (Kelzan^{®}, C P Kelco, U.S.A.), Rhodopol^{®} 23 (Rhodia, Frankreich), Veegum^{®} (R. T. Vanderbilt, U.S.A.) oder Attaclay^{®} (Engelhard Corp., NJ, USA).

Auch Gefrierschutzmittel können in der Komponente C) eingesetzt werden, wie beispielsweise Ethylenglykol, Propylenglykol, Harnstoff und Glycerin, und/oder Antischaummittel, wie beispielsweise Silikon Emulsionen (wie z. B. Silikon RSRE, Wacker, Deutschland oder Rhodorsil^{®}, Rhodia, Frankreich, oder wie Dimethylpolysiloxane), langkettige Alkohole, Fettsäuren, Salze von Fettsäuren, fluororganische Verbindungen.

Schließlich kann die Komponente C) Färbemitteln enthalten, wie beispielsweise wasserunlösliche Pigmente oder wasserlösliche Farbstoffe, wie Rhodamin B, Solvent rot 1, Pigment Blue 15:4, Pigment Blue 15:3, Pigmentblau 15:2, Pigmentblau 15:1, Pigmentblau 80, Pigment gelb 1, Pigment gelb 13, Pigment rot 112, Pigment rot 48:2, Pigment rot 48:1, Pigment rot 57:1, Pigment rot 53:1, Pigment orange 43, Pigment orange 34, Pigment orange 5, Pigment grün 36, Pigment grün 7, Pigment weiß 6, Pigment braun 25, basisch violett 10, basisch violett 49, sauer rot 51, sauer rot 52, sauer rot 14, sauer blau 9, saures Gelb 23, basisches Rot 10, basisches Rot 108, saures Rot 18-Nahrungsmittel rot 7, Lebensmittelrot 1, Perlglanzpigment 1025, Perlglanzpigment Glimmer/TiO2, Glimmerplättchen beschichtet mit Titandioxid und/oder Eisenoxid.

Der wesentliche Bestandteil der Komponente D) ist vorzugsweise ausgewählt aus einem Rhizobienstamm oder mehreren verschiedenen Rhizobienstämmen, wie beispielsweise Bradyrhizobium japonicum, Bradyrhizobium japonicum, Sinorhizobium meliloti, Bradyrhizobium sp. Lupini, Rhizobium leguminosarum biovar viceae, natürlich vorkommend oder gentechnisch modifiziert, und Bakterien, welche mit Rhizobiengenen gentechnisch verändert sind. Generell sind aber im Kern alle Mikroorganismen einsetzbar, welche die Keimfähigkeit von Samen und/oder das Wachstum von Pflanzen fördern.

Die Komponenten D)kann des Weiteren handelsübliche Bakterizide, wie beispielsweise Bakterizide auf Basis von Dichlorophen und Benzylalkoholhemiformal (Proxel^{®}) von ICI oder Acticide^{®} RS von Thor Chemie und Kathon^{®} MK von Rohm & Haas) und Isothiazolinon-Derivate wie Alkylisothiazolinone und Benzisothiazolinone (Acticide^{®}), und/oder 1.2-Benzisothiazolin-3-on auf Wasserbasis (CAS-Nr. 2634-33) enthalten.

Die Komponente D) kann des Weiteren handelsübliche Pestizide, wie beispielsweise Strobilurine, Carboxamide, Azole, heterozyklische Verbindungen, Carbamate, und/oder Wachstumsregulatoren enthalten, und/oder handelsübliche Fungizide, Herbizide, Insektizide, Akarizide und/oder Ematizide enthalten.

Die Komponente D) kann schließlich Schutzmittel vor Schädigungen des Saatgutes vor Schäden durch vorgehend genannte Stoffe enthalten, wie beispielsweise 8-Chinolinyloxyessigsäuren (wie Cloquintocet-Mexyl), 1-Phenyl-5-haloalkyl-1, 2,4-triazol-3-carbonsäuren (wie Fenchlorazol und Fenchlorazol-ethyl), 1-Phenyl-5-alkyl-2-pyrazolin-3,5-dicarbonsäure (wie Mefenpyr und Mefenpyr-diethyl), 4,5-Dihydro-5,5-diaryl-1,2-oxazol-3-carbonsäuren (wie Isoxadifen und Isoxadifen-ethyl), Dichloracetamide (wie Dichlormid, Furilazol, Dicyclonon und Benoxacor), alpha-(Alkoxyimino)-benzolacetonitril (wie Cyometrinil und Oxabetrinil), Acetophenon, Oxime (wie Fluxofenim), 4,6-Dihalogeno-2-phenylpyrimidine (wie Fenclorim), N-((4-Alkylcarbamoyl)-phenylsulfonyl)-2-benzamide (wie Cyprosulfamid), 1,8-Naphthalsäureanhydrid, 2-Halogen-4-halogenalkyl-1,3-thiazol-5-carbonsäuren und 2-Halogen-4-halogenalkyl-1,3-thiazol-5-carboxylate (wie Flurazol), N-Alkyl-O-phenylcarbamate (wie Mephenat), N-Alkyl-N'-arylharnstoffe (wie Daimuron und Cumyluron), S-Alkyl-N-alkyl-thiocarbamate (wie Dimepiperat) und Phosphorothioate (wie Dietholat) sowie ihre landwirtschaftlich nutzbaren Salze oder Derivate, wie z.B. Amide, Ester und Thioester im Falle von vorhandenen Carbonsäurefunktionen.

Die Komponenten A) und D) können miteinander gemischt vorliegen. Wenn die Mikroorganismen der Komponente D) feucht vorliegen, ist dann auch die Komponente E) in die Komponente A) eingemischt. Werden beispielsweise Histicks^{®} eingesetzt (Mikroorganismen, feucht, in Torf, unabhängig von dem vorstehend genannten Produkt), ist es auch möglich, dass insofern die Komponenten A), B), D) und E) miteinander gemischt sind. Selbstverständlich kann auch noch die Komponente C) zugemischt sein. Dann ist das Zubereitungsset ein Einkomponentenset.

Zur Durchführung des erfindungsgemäßen Verfahrens werden die Komponenten miteinander gemischt oder separat voneinander und vorzugsweise in folgenden Mengenverhältnissen verwendet:
a) 1 - 90 Gew.-% der Komponente A), insbesondere 5 - 70 Gew.-%, vorzugsweise 10 - 50 Gew.-%,
b) 0 - 70 Gew.-% der Komponente B), insbesondere 1 - 70 Gew.-%, vorzugsweise 1 - 50 Gew.-%, höchstvorzugsweise 5-50 Gew.-%
c) 0 - 30 Gew.-% der Komponente C), insbesondere 0,01 - 10 Gew.-%, vorzugsweise 0,1 - 20 Gew.-%,
d) 0,01 - 30 Gew.-% der Komponente D), insbesondere 0,1 - 10 Gew.-%, vorzugsweise 0,1 - 20 Gew.-%,
e) 0 - 99 Gew.-% der Komponente E), insbesondere 0,1 - 99 Gew.-%, vorzugsweise 5 - 50 Gew.-%,
wobei die Summe der Mengen a) bis e) sich stets zu 100 Gew.-% addiert.

Die Erfindung betrifft des Weiteren das Saatgut, beschichtet unter Anwendung des erfindungsgemäßen Verfahrens.

Der wesentliche Aspekt des Verfahrens besteht in der zumindest milden Erhöhung der Temperatur gegenüber dem Stand der Technik, in welchem Wachsdispersionen ohne Erwärmung auf das Saatgut aufgebracht werden.

Im Folgenden wird die Erfindung anhand eines lediglich ein Ausführungsbeispiel darstellenden Verfahrens näher erläutert. Es zeigt:

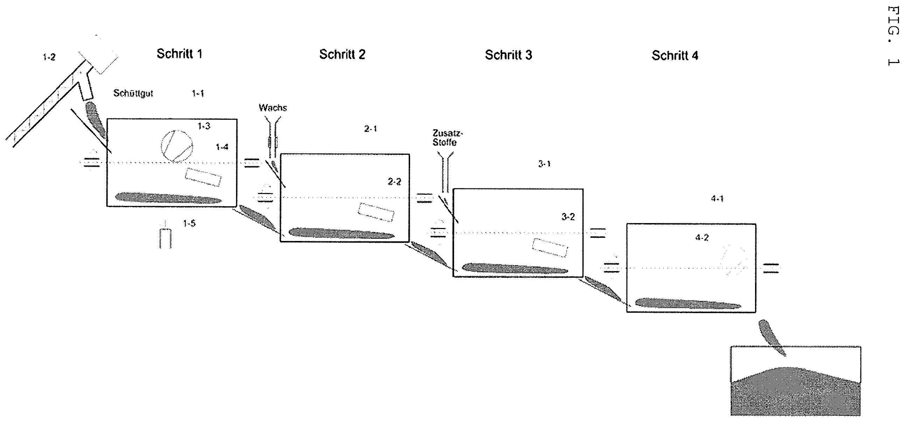

Figur 1: ein Verfahrensschema

Wachse (tierische, pflanzliche, mineralische oder synthetische), welche aufgrund ihrer Eigenschaften glatte, dünne und wasserabweisende Filme bilden, finden viele Anwendungen in vielen Bereichen u. a. als Polituren und Imprägnierungen. Wachse schmelzen ab ca. 40°C zu einer Flüssigkeit. Ähnliche Eigenschaften wie Wachs haben auch Hartfette, die ähnlich wie Wachs angewendet werden können. In Weiteren wird allerdings nur die Wachsanwendung beschrieben.

Das Ziel einer wasserabweisenden Beschichtung ist:
- ein Korn vom Wassereindringen zu schützen, die Wasseraufnahme zu verzögern oder das Korn vor Austrocknung zu schützen,
- Bestandteile an der Kornoberfläche anzubringen, wobei in manchen Fällen die Bestandteile bei der Schichtherstellung nicht in Kontakt mit Wasser kommen sollten oder sich nicht unter Feuchtigkeitseinfluss von der Fläche lösen sollen.

Eine Wachsschicht wird auf ein Korn durch Eintauchen oder Besprühen mit wässeriger Flüssigkeit, die dispergierte, wachsartige Bestandteile beinhaltet, aufgebracht.

Aus der Praxis ist es bekannt mit einem Hydrogel zu beschichten oder das Hydrogel an Körner zu befestigen. Dies wird bei der Produktion von sogenannten Microgreens angewendet.

Hydrogel nimmt relativ schnell Wasser auf und vergrößert sein Volumen. Dadurch ist es fast unmöglich, Hydrogel in wässeriger Umgebung anzuwenden. Um eine Anwendung zu ermöglichen werden die Hydrogelpartikel mit einem Wachsfilm überzogen. Der Wachsfilm bedeckt jedoch nicht 100 % der Oberfläche. Es bleiben Poren und bilden sich Rissen. Je dünner die Schicht, desto kleiner ist das Verhältnis:
bedeckte Fläche / Poren. Bei dickeren Schichten vergrößert sich das Verhältnis.

Es ist wünschenswert eine vordefinierte Schichtdicke zu erzeugen. Man kann es zwar durch die Menge Wachs / Menge Hydrogel beeinflussen, jedoch ist es durch eine nicht gleichmäßige Verteilung des Wachses an der Körneroberfläche (auch die Größe der Oberfläche variiert je nach Korngröße und Kornform) schwer zu realisieren. Und das Verhältnis: bedeckte Fläche / Poren ist entscheidend für Wasserabsorptionseigenschaften eines Kornes.

Die Wasserabsorptionseigenschaften können durch Zugabe verschiedener Zusatzstoffe zu der Beschichtung geändert werden. Das können Stoffe, die Wasser leiten, sein, wie Lehm, oder auch Stoffe wie Sand, welche Wasser an den Grenzflächen transportieren.

Die Stoffe, die sich in der Beschichtung befinden, verhalten sich ähnlich, um es bildlich darzustellen, wie Sand in einem Plastikbeutel, wenn der Beutel kleine Löcher hat. Wird so ein Beutel ins Wasser eingetaucht, kommt relativ schnell relativ viel Wasser rein. Der Sand wird aber viel mehr Zeit brauchen, um das Wasser durch die Löcher abzudampfen und trocken zu werden.

Die Stoffe sind im Wachs eingekapselt, aber es gibt Risse und Spalten, die während des Wachsabkühlens und des - erstarrens entstehen und es gibt Löcher, die wegen der nicht vollständigen Beschichtung entstanden sind.

Im Rahmen der Entwicklung der vorliegenden Erfindung wurden Versuche durchgeführt, um die wasserspeichernde Wirkung verschiedener Beschichtungen an einigen Baumsamensorten (Akazie, Eiche) zu untersuchen. Es wurden zwei pflanzliche Wachssorten angewendet: Rapswachs und Sojawachs. Beide Wachse sind biologisch abbaubar und zur Samenbeschichtung sehr gut geeignet.

Zu der Wachsschicht wurden verschiedene Zusatzstoffe zugegeben. Vor allem wurde Hydrogel, aber auch Lehm, Holzmehl und Zellulose als Wasserspeicher getestet. Die erzeugten Beschichtungen erwiesen sich als relativ fest und glatt (kein Stauben, abriebfest). Voraussetzung war, dass die Zusatzstoffe relativ fein gemahlen waren. Die Körnung ist von den Eigenschaften der Zusatzstoffe und der Form der Samen abhängig, soll aber grundsätzlich 0,1 mm nicht überschreiten.

Die Beschichtung, unabhängig davon, welches Wachs oder Zusatzstoffe angewendet wurden, hat keinen negativen Einfluss auf die Keimfähigkeit oder Keimdauer der Samen. Diese Erkenntnis führte zu der Schlussfolgerung, dass auch Wirkstoffe zu der Beschichtung zugegeben werden können.

Eine große Bedeutung scheinen Zusatzstoffe zu haben, die ihr Volumen unter Wasserzufuhr vergrößern. Durch die Volumenvergrößerung zersprengen sie die Wachsschicht und dadurch ermöglichen sie einen besseren Wasserkontakt mit den Wirkstoffen in der Wachsschicht. Zu den Zusatzstoffen gehören vor allem Hydrogel, viele Bentonite und Lehme und andere Mineralien. Für die Keimung scheint die Wachsschicht keine Bedeutung zu haben, denn nach anfänglicher Wasseraufnahme durch den Samen vergrößert sich dessen Volumen und die Wachsschicht wird zersprengt.

Die Erfindung kann in vielen Bereichen angewendet werden. Besonders geeignet ist es für das Saatgutbeschichten, bei denen viele Wirkstoffe auf einfache Weise auf das Saatgut angebracht werden können.

Ein erfindungsgemäßes Verfahren kann im Einzelnen wie folgt in Zusammenschau mit der Figur 1 ausgeführt werden. Es kann grundsätzlich diskontinuierlich (in Chargen) oder kontinuierlich ausgeführt werden. Im Beispiel ist das Verfahren in vier diskrete Schritte in verschiedenen Beschichtungsbehältern aufgeteilt, es ist aber auch möglich, die Schritte in einem einzigen Beschichtungsbehälter auszuführen. Als Beschichtungsbehälter kommen beispielsweise Drehtrommeln in Frage.

Schritt 1: Das Saatgut wird mittels eines Förderers, beispielsweise Spiralförderer 1-2 in eine rotierende Drehtrommel 1-1 transportiert. In der Drehtrommel 1-1 wird das Saatgut relativ schnell auf eine Temperatur erwärmt, welche höher als die Schmelztemperatur der Komponente A) ist. Das Erwärmen kann mittels eines Heißluftgebläses 1-3, eines Infrarotstrahler 1-4, einer Flamme 1-5, oder auf andere Weise erfolgen. Die Dauer der Erwärmung wird mit der Maßgabe gewählt, dass nur der Oberflächenbereich der Körner des Saatgutes auf besagte Temperatur erwärmt wird, einerseits aus Energiespargründen, andererseits um Schäden an den Körner zu vermeiden, welche das spätere Keimen behindern könnten. Die Aufwärmrate wird dabei durch Leistung und Temperatur der Wärmequelle einerseits und die Schüttgut-Durchflussmenge bzw. Schüttgutvermischung gesteuert und eingestellt. Ersteres erfolgt durch Wahl der Größe und des Neigungswinkels der Drehtrommel. Die Schüttgutvermischung durch Wahl der Form und der inneren Oberfläche der Drehtrommel. Die Temperatur des Schüttgutes (bzw. der Oberflächenbereiche der Körner) kann auch niedriger als vorstehend gewählt werden, dann muss aber eine höhere Temperatur in den folgend beschriebenen Schritten 2 und/oder 3 gewählt werden. Anschließend wird das Saatgut in die Drehtrommel 2-1 überführt.

Schritt 2: Hier wird die Komponente A) dem Schüttgut in einer rotierenden Drehtrommel 2-1 zugefügt. Die Komponente A) liegt in Pulverform vor und kann optional vor der Zugabe auf eine Temperatur unterhalb der Schmelztemperatur erwärmt sein. Die Temperatur des Schüttgutes sollte höher als die Schmelztemperatur der Komponente A) sein, und zwar um soviel höher, dass die im Schüttgut gespeicherte Wärmemenge ausreichend ist, um die zugegebene Komponente A) zu ihrer Schmelztemperatur zu erwärmen und zu schmelzen. Würde das Schüttgut im Schritt 1 auf eine insofern zu niedrige Temperatur erwärmt, dann kann die Mischung aus Schüttgut und Komponente A) zusätzlich erwärmt werden, beispielsweise mit Infrarotstrahler 2-2. Heißluft oder Erwärmung der Drehtrommel wäre weniger geeignet, weil ein Luftstrom Partikel der Komponente A) wegblasen und an der heißen Drehtrommel schmelzen lassen könnte. Bei einer Vorwärmung der Komponente A) kann das Schüttgut auf eine niedrigere Temperatur vorgewärmt sein.

Schritt 3: Zu dem aus der rotierenden Drehtrommel 2-1 in die rotierende Drehtrommel 3-1 transportierten Schüttgut mit Komponente A) werden die Komponente D und ggf. die Komponenten B), C) und E) zugegeben. Diese Komponenten sind im Einzelnen im allgemeinen Teil der Beschreibung dargelegt. Diese Komponenten kleben an der am Saatgut anhaftenden Komponente A) an und werden zumindest zum Teil im Zuge der Anwendung dieses Schrittes von der Komponente A) zugedeckt. Es ist möglich in diesem Schritt 3 auch zusätzliche Komponente A) hinzuzufügen. Dabei kann es sich um eine Komponente A) handeln, welche einen niedrigeren Schmelzpunkt als die in dem Schritt 2 zugefügte Komponente A) hat. Dies ist insbesondere zweckmäßig, wenn die Komponenten D) und ggf. B) und C) mit einer dickeren Schicht der Komponente A) bedeckt werden sollen. Der Prozess in diesem Schritt wird dabei so gesteuert, dass die Temperatur des Schüttgutes relativ niedrig ist, so dass die Mikroorganismen der Komponente D) keinen oder nur geringen Schaden nehmen. Auch wird zweckmäßigerweise die Zeit einer erhöhten Temperatur möglichst kurz gehalten. Dessen ungeachtet kann auch mittels eines Infrarotstrahlers 3-2 Wärme zugeführt werden, wenn dies für den Fortgang des Beschichtungsprozesses vorteilhaft ist. Im Falle temperaturunempfindlicher Komponenten B) bis D) und wenn diese Komponenten in Kontakt mit der Oberfläche von Körnern des Saatgutes kommen dürfen, können diese auch bereits in Schritt 2 zugefügt werden. In diesem Fall können sogar die Schritte 1 bis 3 zu einem einzigen Schritt in einer einzigen Drehtrommel 1-1 zusammengefasst werden.

Schritt 4: In der rotierenden Drehtrommel 4-1 wird das Schüttgut mit Kühlluft 4-2 gekühlt. Je nach Verweilzeit in dieser Drehtrommel wird auch die Schicht der Komponente A) fester, aber solange diese Schicht noch warm ist, wird die Komponente A) an der Oberfläche verschmiert und poliert, wodurch die anderen zugefügten Komponenten zusätzlich mit Komponente A) bedeckt werden.

## Patentansprüche

1. Verfahren zur Beschichtung von Saatgut, wobei die Beschichtung frei von Mikroplastik ist, umfassend die folgenden Verfahrensschritte:
V1) Umwälzen des Saatgutes in einer Beschichtungsanlage, in welcher das Saatgut auf eine Temperatur von zumindest 30°C, insbesondere zumindest 40°C, erwärmt wird;
V2) Zugabe einer Komponente A) bestehend aus einem biologisch abbaubaren Wachs oder einer Mischung verschiedener solcher Wachse, wobei die Komponente A) eine Temperatur von höchstens 60°C, insbesondere höchstens 50°C, insbesondere höchstens 40°C, aufweist, wobei eine permanente Umwälzung des Saatguts und der Komponente A) stattfindet, und die Komponente A) zu ihrer Schmelztemperatur erwärmt wird, schmilzt und an dem Saatgut anhaftet;
V3) Zugabe einer Komponente D), sowie optionale Zugabe einer oder mehrerer Komponenten B), C) und E), wobei
B) einen Trägerstoff oder mehrere verschiedene Trägerstoffe umfasst,
C) einen von B) verschiedenen Zusatzstoff oder mehrere verschiedene solcher Zusatzstoffe umfasst,
D) einen von B) und C) verschiedenen biologisch wirksamen Zusatzstoff oder mehrere solcher Zusatzstoffe umfasst, wobei die Komponente D) zumindest einen die Keimung und das Wachstum der aus dem Saatgut entstehenden Pflanzen fördernden und saatgutfremden Mikroorganismus umfasst, und
E) Wasser ist;
V4) Umwälzung des Saatgutes und der eingefüllten Komponenten A), D), sowie gegebenenfalls B), C) und/oder E), derart, dass die in V3) zugegebenen Komponenten an der am Saatgut anhaftenden Komponente A) ankleben und zumindest zum Teil von der Komponente A) zugedeckt werden und dass das beschichtete Saatgut gebildet wird;
V5) Abkühlung des beschichteten Saatgutes auf Raumtemperatur.

2. Verfahren zur Beschichtung von Saatgut nach Anspruch 1, wobei die Verfahrensschritte V1) bis V5) in einem einzigen Beschichtungsbehälter oder alternativ in mehreren, 2,3 oder 4, separaten Beschichtungsbehältern ausgeführt werden, wobei die Beschichtungsbehälter mit Transportvorrichtungen zum Transport des Produktes einer Verfahrensstufe in den Beschichtungsbehälter der anschließenden Verfahrensstufe miteinander verbunden sind.

3. Verfahren zur Beschichtung von Saatgut nach Anspruch 1 oder 2, wobei das Saatgut ein Saatgut einer oder mehrerer Kulturpflanzen ist, welche ausgewählt ist aus der Gruppe bestehend aus Weizen, Roggen, Gerste, Triticale, Hafer oder Reis; Rüben, z. B. Zuckerrüben oder Futterrüben; Obst, wie Kern-, Stein- oder Beerenobst, z. B. Äpfel, Birnen, Pflaumen, Pfirsiche, Mandeln, Kirschen, Erdbeeren, Himbeeren, Brombeeren oder Stachelbeeren; Hülsenfrüchte, wie z. B. Linsen, Erbsen, Luzerne oder Sojabohnen; Ölpflanzen, wie z. B. Raps, Senf, Oliven, Sonnenblumen, Kokosnuss, Kakaobohnen, Rizinus, Ölpalmen, oder Erdnüsse; Kürbisgewächse, wie Kürbisse, Gurken oder Melonen; Faserpflanzen, wie Baumwolle, Flachs, Hanf oder Jute; Zitrusfrüchte, wie Orangen, Zitronen, Grapefruits oder Mandarinen; Gemüse, wie Spinat, Salat, Spargel, Kohl, Möhren, Zwiebeln, Tomaten, Kartoffeln, Kürbisgewächse oder Paprika; Gewürzpflanzen, wie Avocados, Zimt oder Kampfer; Energie- und Rohstoffpflanzen, wie Mais, Sojabohnen, Raps, Zuckerrohr oder Ölpalmen; Tabak; Nüsse; Kaffee; Tee; Bananen; Reben (Tafeltrauben und Traubensaftreben); Hopfen; Naturkautschukpflanzen oder Zier- und Forstpflanzen, wie Blumen, Sträucher, Laubbäume oder immergrüne Pflanzen, z. B. Koniferen, Akazien, Eichen, Buchen, Eiben, Tannen, Kiefern, Birken, Ahorne, Erlen, Hainbuchen, Weißdorne, Eschen, Stechpalmen, Pappeln, Steinobstbäume, Weiden, Mehlbeeren, Linden und Ulmen.

4. Verfahren zur Beschichtung von Saatgut nach einem der Ansprüche 1 bis 3, wobei die Komponente A) ausgewählt ist aus der Gruppe bestehend aus natürlichen pflanzlichen und tierischen Wachsen, wobei die Komponente A) einen Schmelzpunkt in einem Bereich von 30°C bis 80°C aufweist.

5. Verfahren zur Beschichtung von Saatgut nach einem der Ansprüche 1 bis 4, wobei die Komponente A) mindestens ein pflanzliches Wachs umfasst, welches ausgewählt ist aus der Gruppe von Rapswachs und Sojawachs.

6. Verfahren zur Beschichtung von Saatgut nach einem der Ansprüche 1 bis 5, wobei die Komponente D) ausgewählt ist aus einem Rhizobienstamm oder mehreren verschiedenen Rhizobienstämmen, und Bakterien, welche mit Rhizobiengenen gentechnisch verändert sind, wobei optional für die vorstehend genannten Mikroorganismen unschädliche Pestizide wie Bakterizide, Fungizide, Herbizide, Insektizide, Akarizide, Ematizide, und/oder Schutzmittel vor Schädigungen des Saatgutes und/oder vorstehender Mikroorganismen vor Schäden durch vorgehende Stoffe, enthalten sind.

7. Verfahren zur Beschichtung von Saatgut nach einem der Ansprüche 1 bis 6, wobei die Komponente B) ein in Wasser quellbarer oder nicht quellbarer Zusatzstoff ist, beispielsweise ausgewählt aus mineralischen Erden, wie Silikaten, Kieselsäuren, Gelen, Hydrogelen, Talkum, Kaoline, Kalkstein, Kalk, Kreide, Löss, Tone, Dolomit, Diatomeenerde, Calciumsulfat, Magnesiumsulfat, Magnesiumoxid, und/oder Fertilisatoren, wie beispielsweise Ammoniumsulfat, Ammoniumphosphat, Ammoniumnitrat, Harnstoffe, und/oder Erzeugnissen pflanzlichen Ursprungs, wie beispielsweise Getreidemehl, Baumrindenmehl, Holzmehl und Nussschalenmehl, Zellulosepulver, Torf, und Mischungen verschiedener solcher Zusatzstoffe, wobei die Partikelgröße dieser Zusatzstoffe vorzugsweise unter 300 µm, insbesondere unter 100 µm liegt, gemessen mit einem Prüfsieb entsprechender Maschenweite.

8. Verfahren nach einem der Ansprüche 1 bis 7, wobei die Komponente C) ausgewählt ist aus nicht-wässrigen Lösungsmitteln, und/oder aus einem oder mehreren Mitteln aus der Gruppe bestehend aus Tensiden, Dispergiermittel, Emulgatoren, Löse- und Haftvermittler und Schutzkolloide, organische und anorganische Verdickungsmittel, Gefrierschutzmitteln, Antischaummitteln, und/oder Färbemitteln.

9. Verfahren nach einem der Ansprüche 1 bis 8, wobei eine zusätzliche Wärmequelle in der Beschichtungseinrichtung vorhanden ist, um das Saatgut und die Komponente A) bis zur Bildung der Beschichtung auf Temperatur zu halten.

10. Verfahren nach einem der Ansprüche 1 bis 9, wobei die Komponente D) erst nach zumindest teilweiser Verflüssigung der Komponente A) zugesetzt wird.

11. Verfahren nach einem der Ansprüche 1 bis 10, wobei das Saatgut aus V1) auf eine Temperatur oberhalb der Schmelztemperatur der Komponente A) erwärmt ist und die Komponente A) in Pulverform zu dem erwärmten Saatgut aus V1) gegeben wird, sodass es bei Kontakt mit dem erwärmten Saatgut schmilzt oder durch zusätzliche Wärmezufuhr geschmolzen wird.

12. Beschichtetes Saatgut hergestellt gemäß des Verfahrens nach einem der Ansprüche 1 bis 11, wobei das beschichtete Saatgut frei von Mikroplastik ist und durch Schmelzen der Komponente A) eine wachshaltige Beschichtung auf der Samenoberfläche gebildet wurde, welche die Komponente D), sowie optional eine oder mehrere der Komponenten B), C), und E), enthält.

## Claims

1. A method for coating seeds, wherein the coating is free of microplastics, and the method comprises the following steps:
V1) tumbling the seeds in a coating system in which the seeds are heated to a temperature of at least 30°C, in particular at least 40°C;
V2) addition of component A) consisting of a biodegradable wax or a mixture of different such waxes, wherein the component A) has a temperature of at most 60°C, in particular at most 50°C, in particular at most 40°C, wherein a continuous tumbling of the seeds and the component A) takes place, and the component A) is heated to its melting temperature, melts, and adheres to the seeds;
V3) addition of component D), and optional addition of one or more components B), C) and E), wherein
B) comprises a carrier or several different carriers,
C) comprises an additive other than B) or several different such additives,
D) comprises a biologically active additive other than B) and C) or several such additives, wherein component D) comprises at least one seed-foreign microorganism promoting germination and growth of the plants arising from the seed, and
E) is water;
V4) tumbling the seeds and the added components A), D), and optionally B), C), and/or E), such that the components added in V3) adhere to component A) on the seeds and are at least partially covered by component A), and that the coated seeds are formed;
V5) cooling the coated seeds to room temperature.

2. The method for coating seeds according to claim 1, wherein process steps V1) to V5) are carried out in a single coating container or alternatively in several, 2, 3 or 4, separate coating containers, the coating containers being connected to one another by means of transport devices for transporting the product of one process step to the coating container of the subsequent process step.

3. The method for coating seeds according to claim 1 or 2, wherein the seeds are seeds of one or more crops selected from the group consisting of wheat, rye, barley, triticale, oats or rice; beets, e.g. sugar beets or fodder beets; fruits, such as pome, stone or berry fruits, e.g. apples, pears, plums, peaches, almonds, cherries, strawberries, raspberries, blackberries or gooseberries; pulses, such as lentils, peas, alfalfa or soybeans; oilseed crops, such as rapeseed, mustard, olives, sunflowers, coconut, cocoa beans, castor beans, oil palms, or peanuts; cucurbits, such as pumpkins, cucumbers or melons; fiber crops, such as cotton, flax, hemp or jute; citrus fruits, such as oranges, lemons, grapefruits or tangerines; vegetables such as spinach, lettuce, asparagus, cabbage, carrots, onions, tomatoes, potatoes, squash, or peppers; spice plants such as avocados, cinnamon, or camphor; energy and raw material crops such as corn, soybeans, rapeseed, sugarcane, or oil palms; tobacco; nuts; coffee; tea; bananas; grapevines (table grapes and juice grapes); hops; natural rubber plants; or ornamental and forest plants such as flowers, shrubs, deciduous trees, or evergreens, e.g. conifers, acacias, oaks, beeches, yews, firs, pines, birches, maples, alders, hornbeams, hawthorns, ashes, hollies, poplars, stone fruit trees, willows, serviceberries, linden trees and elms.

4. The method for coating seeds according to any one of the claims 1 to 3, wherein component A) is selected from the group consisting of natural vegetable and animal waxes, and wherein component A) has a melting point in the range of 30°C to 80°C.

5. The method for coating seeds according to any one of the claims 1 to 4, wherein component A) comprises at least one vegetable wax selected from the group consisting of rapeseed wax and soybean wax.

6. The method for coating seeds according to any one of the claims 1 to 5, wherein component D) is selected from a rhizobia strain or several different rhizobia strains, and bacteria which are genetically modified with rhizobia genes, wherein optionally pesticides such as bactericides, fungicides, herbicides, insecticides, acaricides, nematicides, and/or protective agents against damage to the seeds and/or the aforementioned microorganisms against damage by preceding substances are included that are harmless to the aforementioned microorganisms.

7. The method for coating seeds according to any one of the claims 1 to 6, wherein component B) is a water-swellable or non-swellable additive, for example selected from mineral earths such as silicates, silicic acids, gels, hydrogels, talc, kaolin, limestone, lime, chalk, loess, clays, dolomite, diatomaceous earth, calcium sulfate, magnesium sulfate, magnesium oxide, and/or fertilizers such as ammonium sulfate, ammonium phosphate, ammonium nitrate, urea, and/or products of plant origin such as cereal flour, bark meal, wood flour and nutshell meal, cellulose powder, peat, and mixtures of various such additives, wherein the particle size of these additives is preferably less than 300 µm, in particular less than 100 µm, as measured with a test sieve of appropriate mesh size.

8. The method according to any one of the claims 1 to 7, wherein component C) is selected from non-aqueous solvents, and/or from one or more agents from the group consisting of surfactants, dispersants, emulsifiers, solubilizers and adhesion promoters, and protective colloids, organic and inorganic thickeners, antifreeze agents, antifoaming agents, and/or colorants.

9. The method according to any one of the claims 1 to 8, wherein an additional heat source is provided in the coating device to maintain the temperature of the seeds and component A) until the coating is formed.

10. The method according to any one of the claims 1 to 9, wherein component D) is added only after component A) has at least partially liquefied.

11. The method according to any one of the claims 1 to 10, wherein the seeds from V1) are heated to a temperature above the melting point of component A), and component A) is added in powder form to the heated seeds from V1) such that it melts upon contact with the heated seeds or is melted by the addition of heat.

12. Coated seeds produced according to the method of any one of the claims 1 to 11, wherein the coated seeds are free of microplastics and a wax-containing coating has been formed on the seed surface by melting component A), which comprises component D), and optionally one or more of components B), C), and E).

## Revendications

1. Procédé d'enrobage de semences, l'enrobage étant exempt de microplastiques, comprenant les étapes de procédé suivantes :
V1) Brassage des semences dans une installation d'enrobage, dans laquelle les semences sont chauffées à une température d'au moins 30 °C, en particulier d'au moins 40 °C ;
V2) Ajout d'un composant A) constitué d'une cire biodégradable ou d'un mélange de différentes cires de ce type, le composant A) présentant une température d'au plus 60 °C, en particulier d'au plus 50 °C, en particulier d'au plus 40 °C, un brassage permanent des semences et du composant A) ayant lieu, et le composant A) étant chauffé jusqu'à sa température de fusion, fondant et adhérant aux semences ;
V3) Ajout d'un composant D), ainsi qu'ajout facultativement d'un ou plusieurs composants B), C) et E), dans lequel
B) comprend un support ou plusieurs excipients différents,
C) comprend un ou plusieurs additifs différents de B),
D) comprend un ou plusieurs additifs biologiquement actifs différents de B) et C), le composant D) comprenant au moins un micro-organisme étranger aux semences favorisant la germination et la croissance des plantes issues des semences, et
E) est de l'eau ;
V4) Mise en mouvement des semences et des composants A), D), ainsi que, le cas échéant, B), C) et/ou E), de manière à ce que les composants ajoutés en V3) adhèrent au composant A) fixé sur les semences et soient au moins partiellement recouverts par le composant A), de sorte que les semences enrobées sont formées ;
V5) Refroidissement des semences enrobées à la température ambiante.

2. Procédé d'enrobage de semences selon la revendication 1, dans lequel les étapes de procédé V1) à V5) sont réalisées dans un seul récipient d'enrobage ou, de manière alternative, dans plusieurs récipients d'enrobage séparés, 2, 3 ou 4, les récipients d'enrobage étant reliés entre eux par des dispositifs de transport pour le transfert du produit d'une étape du procédé vers le récipient d'enrobage de l'étape suivante du procédé.

3. Procédé d'enrobage de semences selon la revendication 1 ou 2, dans lequel les semences sont celles d'une ou plusieurs plantes cultivées sélectionnées dans le groupe constitué de blé, seigle, orge, triticale, avoine ou riz ; betteraves, par exemple betteraves sucrières ou fourragères ; fruits, tels que fruits à pépins, fruits à noyau ou petits fruits, par exemple pommes, poires, prunes, pêches, amandes, cerises, fraises, framboises, mûres ou groseilles ; légumineuses, telles que lentilles, pois, luzerne ou soja ; plantes oléagineuses, telles que colza, moutarde, olives, tournesol, noix de coco, fèves de cacao, ricin, palmier à huile ou arachides ; cucurbitacées, telles que courges, concombres ou melons ; plantes à fibres, telles que coton, lin, chanvre ou jute ; agrumes, tels que oranges, citrons, pamplemousses ou mandarines ; légumes, tels que épinards, laitue, asperges, choux, carottes, oignons, tomates, pommes de terre, cucurbitacées ou poivrons ; plantes aromatiques, telles que avocats, cannelle ou camphre ; plantes énergétiques et industrielles, telles que maïs, soja, colza, canne à sucre ou palmier à huile ; tabac ; fruits à coque ; café ; thé ; bananes ; vignes (raisin de table et vigne à jus) ; houblon ; plantes à caoutchouc naturel ou plantes ornementales et forestières, telles que fleurs, arbustes, arbres feuillus ou plantes à feuillage persistant, par exemple conifères, acacias, chênes, hêtres, ifs, sapins, pins, bouleaux, érables, aulnes, charmes, aubépines, frênes, houx, peupliers, arbres fruitiers à noyau, saules, sorbiers, tilleuls et ormes.

4. Procédé d'enrobage de semences selon l'une quelconque des revendications 1 à 3, dans lequel le composant A) est sélectionné dans le groupe constitué de cires naturelles végétales et animales, le composant A) présentant un point de fusion compris entre 30 °C et 80 °C.

5. Procédé d'enrobage de semences selon l'une quelconque des revendications 1 à 4, dans lequel le composant A) comprend au moins une cire végétale sélectionnée dans le groupe constitué de cire de colza et cire de soja.

6. Procédé d'enrobage de semences selon l'une quelconque des revendications 1 à 5, dans lequel le composant D) est sélectionné parmi une souche de rhizobium ou plusieurs souches différentes de rhizobium, et des bactéries génétiquement modifiées contenant des gènes de rhizobium, comprenant facultativement des pesticides compatibles pour les micro-organismes susmentionnés, comme des bactéricides, fongicides, herbicides, insecticides, acaricides, nématicides, et/ou des agents de protection contre des dommages au niveau des semences et/ou des micro-organismes susmentionnés.

7. Procédé d'enrobage de semences selon l'une quelconque des revendications 1 à 6, dans lequel le composant B) est un additif gonflant ou non gonflant dans l'eau, sélectionné par exemple parmi des terres minérales telles que silicates, silices, gels, hydrogels, talc, kaolins, calcaire, chaux, craie, loess, argiles, dolomite, terre de diatomées, sulfate de calcium, sulfate de magnésium, oxyde de magnésium, et/ou fertilisants tels que sulfate d'ammonium, phosphate d'ammonium, nitrate d'ammonium, urée, et/ou produits d'origine végétale tels que farine de céréales, farine d'écorce, farine de bois et farine de coques de noix, cellulose en poudre, tourbe, et mélanges de différents additifs de ce type, la taille des particules étant de préférence inférieure à 300 µm, en particulier inférieure à 100 µm, mesurée avec un tamis de maille appropriée.

8. Procédé selon l'une quelconque des revendications 1 à 7, dans lequel le composant C) est sélectionné parmi des solvants non aqueux et/ou un ou plusieurs agents sélectionnés dans le groupe constitué de tensioactifs, agents dispersants, agents émulsifiants, agents de solubilisation et d'adhésion, colloïdes protecteurs, épaississants organiques et inorganiques, agents antigel, agents anti-mousse et/ou colorants.

9. Procédé selon l'une quelconque des revendications 1 à 8, dans lequel une source de chaleur supplémentaire est présente dans le dispositif d'enrobage afin de maintenir les semences et le composant A) à la température nécessaire pour permettre la formation de l'enrobage.

10. Procédé selon l'une quelconque des revendications 1 à 9, dans lequel le composant D) n'est ajouté qu'après liquéfaction au moins partielle du composant A).

11. Procédé selon l'une quelconque des revendications 1 à 10, dans lequel les semences issues de V1) sont chauffées à une température supérieure à la température de fusion du composant A) et le composant A) sous forme de poudre est ajouté aux semences chauffées issues de V1), de sorte qu'il fond au contact des semences ou par apport de chaleur supplémentaire.

12. Semences enrobées fabriquées selon le procédé selon l'une quelconque des revendications 1 à 11, dans lequel les semences enrobées étant exemptes de microplastiques et un enrobage contenant de la cire ayant été formé à la surface des graines par fusion du composant A), lequel contient le composant D) et, en option, un ou plusieurs des composants B), C) et E).
